# EUROPEAN PATENT SPECIFICATION

(11) **EP 2 182 702 B1**
(45) Date of publication and mention of the grant of the patent: **20.08.2014**
(21) Application number: 09275098.3
(22) Date of filing: 07.10.2009
(51) Int. Cl.: H04L 29/14

(54) **Method and apparatuses for establishing a communication in a mobile communication network including two different subsystems**
Verfahren und Vorrichtungen zum Aufbau einer Kommunikation in einem mobilen Kommunikationsnetz mit zwei verschiedenen Subsystemen
Méthode et dispositifs pour établir une communication dans un réseau de télécommunications sans fil comprenant deux sous-systèmes différents

(30) Priority: 07.10.2008 GB 0818324
(43) Date of publication of application: 05.05.2010
(73) Proprietor: Vodafone Group PLC, Newbury Berkshire RG14 2FN (GB)
(72) Inventor: Wong, Gavin, Newbury, Berkshire RG14 2FN (GB); Pudney, Christopher, Newbury, Berkshire RG20 9EZ (GB); Russell, Nick, Newbury, Berkshire RG14 2FN (GB)
(74) Representative: Boult Wade Tennant

(56) References cited:
- "Digital cellular telecommunications system (Phase 2+); Universal Mobile Telecommunications System (UMTS); LTE; Single Radio Voice Call Continuity (SRVCC); Stage 2 (3GPP TS 23.216 version 8.1.0 Release 8)" TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, [Online] no. V8.1.0, September 2008 (2008-09), XP002573660 Retrieved from the Internet: URL:http://www.3gpp.org/ftp/Specs/archive/ 23_series/23.216/23216-810.zip>
- "Digital cellular telecommunications system (Phase 2+); Universal Mobile Telecommunications System (UMTS); LTE; IP Multimedia System (IMS) centralized services; Stage 2 (3GPP TS 23.292 version 8.0.0 Release 8)" TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, [Online] no. V8.0.0, June 2008 (2008-06), XP002573661 Retrieved from the Internet: URL:http://www.3gpp.org/ftp/Specs/archive/ 23_series/23.292/23292-800.zip>
- VODAFONE: "Terminating voice call handling in SRVCC networks supporting EPS ISR" 3GPP DRAFT; S2-086728 CR 23216-810 SRVCC MT CALL HANDLING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. China; 20081007, 7 October 2008 (2008-10-07), XP050331340 [retrieved on 2008-10-07]
- VODAFONE: "Terminating voice call handling in networks supporting SAE ISR and/or Release R'99 ISR" 3GPP DRAFT; S2-086727 SRVCC MT CALL HANDLING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. China; 20081007, 7 October 2008 (2008-10-07), XP050331339 [retrieved on 2008-10-07]

## Description

The present invention relates to a cellular telecommunications network having more than one Radio Access Technology (RAT): e.g. "long term evolution" bearer technology (LTE - a so-called 4G technology) and 2G/3G bearer technologies (such as GSM and UMTS). In particular, the invention relates to the termination of voice call handling in networks supporting idle-mode signalling reduction (ISR) (such as SAE ISR and/or "Release R'99 ISR").

In currently deployed cellular networks there are typically two different RATs: a second generation (2G) design following the GSM radio access standards and a third generation (3G) design following UMTS Terrestrial Radio Access Network (UTRAN) design. It is contemplated that in future a number of different RAT designs will proliferate and coexist: for instance, the long term evolution (LTE) of the UTRAN design (so-called E-UTRAN or "evolved" UTRAN) is expected to operate in parallel with existing 3G and 2G RATs.

There may be different strategies for delivering voice calls for a network, e.g. voice calls should be delivered on circuit switched (CS) in 2G access, but may be CS or packet switched (PS) in 3G access, whilst only PS access will be available when on E-UTRAN [since E-UTRAN is a data-only technology]. These policies could be preconfigured onto the UE such that it follows these requirements during mobile originating (MO) calls.

In order for the policies to be followed in the mobile terminating (MT) direction, the network needs to be able to identify the availability of the UE in specific RAT accesses. Whilst a called UE is in Idle mode, it needs to be paged. However due to ISR, and/or the use of common 2G/3G routing areas, it is not possible to know whether the called UE is camped on GERAN, UTRAN or EUTRAN and therefore whether a mobile terminating call attempt should be made in CS or PS.

In this regard, ISR is a mechanism that allows a User Equipment (UE) to remain simultaneously registered in a UTRAN/GERAN Routing Area (RA) and an E-UTRAN Tracking Area (TA) list. This allows the UE to make cell reselections between E-UTRAN and UTRAN/GERAN without a need to send any TA Update or RA Update requests, as long as the UE remains within the registered RA and TA lists. Consequently, ISR is an advantageous feature that reduces the mobility signalling and improves the battery life of UEs. This is important especially in initial deployments when E-UTRAN coverage will be limited and inter-RAT changes will be frequent.

However, as mentioned above, a disadvantage of ISR is that the paging procedures for UEs are more complex, as calling parties cannot determine which RAT a called UE is registered in when ISR is active, and so the called UE needs to be paged on both the registered RAs and the registered TAs. A further disadvantage is that the core network Home Subscriber Server (HSS) needs to maintain two Packet Switching (PS) registrations (i.e. one from the E-UTRAN MME (Mobility Management Entity) and another from the UTRAN/GERAN SGSN (Serving GPRS Support Node)).

Therefore, a voice call initiated in the circuit switched (CS) domain, towards a mobile in idle state and with idle mode signalling reduction active, means that the terminating UE could be registered in a 2G, 3G or EUTRAN (LTE) RAT. Accordingly, the voice call termination may fail due to a called UE not being available in the CS domain (i.e. if registered in LTE). Also degraded voice performance may result when a call is established in 2G or 3G using the PS domain (e.g. VoIP over IMS) as the bandwidth may not be adequate for quality voice services.

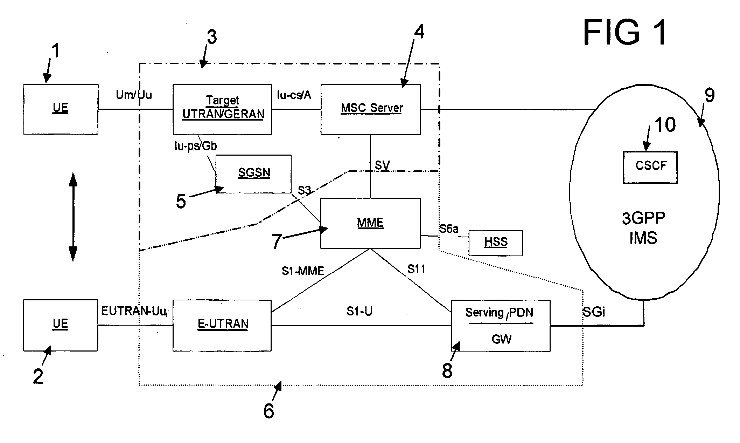

Mobile terminating IMS voice sessions are also a candidate for Single Radio Voice Call Continuity (SRVCC). SRVCC refers to continuity between IMS over PS access and CS calls that are anchored in IMS when the UE is capable of transmitting/receiving on only one of those access networks at a given time. SRVCC is specified in TS 23.216. Figure 1 shows the entities involved in SRVCC.

Terminating call handling for an SRVCC UE is not defined in 3GPP standards especially when voice calls are expected to be established over the CS domain when on 2G or 3G access. When in idle state, especially with ISR active, the IMS network is unable to accurately determine whether the CS domain is available or not and therefore the terminating access domain selection may be inaccurate. As a result request for terminating calls may be sent to the UE in the IMS domain even though the user plane ought to be established in the CS domain when it is available. Mobile terminating (MT) TS11 calls (TS11 specifies supplementary services for circuit switched speech) are also a candidate for SRVCC and can be considered synonymous with MT IMS voice sessions.

Further, in a network that uses ISR principles between LTE and 2G, and/or uses common 2G/3G routing areas, determining the availability of a UE to accept a mobile terminating (MT) lntemet protocol Multirriedia Subsystem (IMS) voice session (i.e. a PS voice call) is not necessarily possible. This is because 2G networks do not support PS voice calls, and in these situations it is not known if the UE is registered in a 2G network since the UE typically performs no signalling when entering or leaving the 2G RAT.

There is therefore a need to overcome or ameliorate at least one of the problems of the prior art. There is particularly a need to address the problem of a correctly terminating CS and PS communications where the RAT of the called UE is unknown.

### Summary of the Invention

According to a first aspect the present invention provides a method of establishing a new voice communication with a mobile terminal configured for use in a mobile telecommunications network, the network including at least two different subsystems, the method including: receiving an initial voice communication request in accordance with a first subsystem, at the mobile terminal; determining if conditions associated with the mobile terminal are compatible with implementing a voice call in accordance with the first subsystem; and where conditions are determined not to be compatible, sending a relevant response.

The subsystem may be a packet switched subsystem, and the conditions determined to not be compatible include: the mobile terminal being idle and registered with a network element which only supports voice communications in a circuit switched subsystem; and/or the mobile terminal being configured to only support voice communications in the circuit switched subsystem.

The relevant response may be a request to reattempt the voice communication in accordance with the circuit switched subsystem.

Alternatively, the relevant response may be a request to establish a new communication in accordance with the circuit switched subsystem.

The mobile terminal may determine the relevant response based on its knowledge of the serving network identity and/or whether it is roaming.

The conditions associated with the mobile terminal are preferably UE preferences and configuration. Examples of UE preferences and configuration upon which selection is based include: the UE's RAT type (i.e. 2G or 3G), the Visited Public Land Mobile Network (VPLMN) ID for that UE and/or roaming status of the UE. Depending upon UE preferences and configuration, the UE would then select a course of action.

For instance, in accordance with a specific aspect of the invention, the UE can detect that an incoming SIP INVITE from IMS is related to a voice call. The UE, when the conditions are not suitable for establishing the PS call, then sends a relevant response, for instance requesting that the network connect the call using the CS domain directly. Alternatively the UE simply indicates to the network that the call is not possible. The UE is thus preferably configured to respond in a terminating manner in these circumstances.

A response in a terminating manner may conveniently be to request an alternative service, or to reject the SIP INVITE.

Conditions under which the UE may be caused to act in this manner include conditions where the UE is currently camped on a 2G RAN or a non-HSPA 3G RAN *and* where the UE does not already have an active call. Where the relevant response is to establish a new call, this new CS call is ideally bound to the existing terminating call attempt via the various addresses in use (e.g. calling line id, called party address).

If there is already a call active (in the CS domain), the IMS may choose instead to deliver the call in the CS domain directly to ensure that the mid-call services are handled correctly whilst dealing with the Dual Transfer Mode (DTM) vs. non DTM issues using the IMS Centralized Services (ICS) procedures defined in 3GPP TS 23.292 and therefore are outside the scope of this solution.

Further optimisations can be made in case the UE is camped on a radio access network that is connected to the CS domain.

However, if the UE was in idle mode and camped on E-UTRAN access, the normal paging and IMS procedures apply (i.e. there is no conversion to a CS call at the UE).

The invention therefore adds a facility for the UE (mobile) to detect whether a terminating call is related to voice and either directly to establish a CS call that needs to be bridged by the network or to inform the network that a voice call in the PS domain is not compatible with the UE's current situation/configuration. In other words it adds a procedure for terminating call handling and corresponding UE functionality to establish a CS call leg to the IMS anchor point (i.e. the Service Consistency & Continuity Application Server, SCC-AS) instead of completing in IMS.

Without doing this, terminating calls may be incorrectly established in the PS domain when on 2G /3G leading to potential call establishment failures.

### Brief Description of the Drawings

For a better understanding of the present invention a number of embodiments will now be described, by way of example, with reference to the accompanying drawings, in which:
Figure 1 illustrates an example of the arrangement of elements used to connect a user equipment (UE) communicating through an E-UTRAN network to a UE communicating through a UTRAN/GERAN and also their association with a 3GPP IMS network for implementing Single Radio Voice Call Continuity (SRVCC);
Figure 2 shows schematically the basic operation of parallel paging;
Figure 3 shows the procedure for full terminating call flow including parallel paging according to an embodiment of the invention;
Figure 4 shows a simplified terminating call flow in accordance with another embodiment of the invention; and
Figure 5 illustrates schematically a hybrid terminating voice call procedure in 3GPP UTRAN/GERAN incorporating embodiments of the present invention.

### Detailed Description

Figure 1 illustrates a UE 1 communicating through a 2G/3G UTRAN/GERAN network 3 (or camped on the UTRAN/GERAN network if UE 1 is in idle mode). The UTRAN/GERAN network includes a Mobile Switching Centre (MSC) server 4 and a Serving GPRS Support Node (SGSN) 5.

A UE 2 is communicating through an E-UTRAN network 6 (or is camped thereon if UE 2 is in idle mode). The E-UTRAN network includes a Mobility Management Entity (MME) 7 and a Serving Packet Data Network Gateway (PDN GW) 8.

The UTRAN/GERAN network communicates with 3GPP IMS networks 9 via its VoIP- enabled MSC server 4, and the E-UTRAN network correspondingly via its Serving PDN GW 8. In this regard the IP multimedia system (IMS) may be used for VoIP PS calls, or for CS calls anchored in IMS (i.e. where CS bearer replaced with a PS connection on lower layers, but the protocol stack for call establishment left in place).

Now considering the situation of UE 2 initiating a call towards UE 1, if UE 1 is active, and currently has a CS voice call connection, Supplementary Services handling is invoked according to TS11 and user requirements. These subsequent call handling steps are known and will not be described further here. Where UE 1, however, is in idle mode, and Idle Mode Signalling Reduction has been implemented, it will not be possible to determine if UE 1 is idle in a 2G, 3G or 4G network. In anticipation of this problem, the core network may have one or more predefined preferences for attempting connection with UE 1. For instance, when it is not possible to determine what RAT network UE 1 is camped in, a preference order may be defined to determine in what form calls are initiated by default. For instance, the first preference may be to attempt calls in CS where the end RAT type is unknown. As an alternative to a predefined preference order, the decision can be based upon other factors, for instance based upon the RAT type or the UE's last known location.

In the IMS 9, the SIP request would be handled by Call Session Control Function (CSCF) 10, which is used to process all signalling packets in the IMS. The CSCF would then forward the signalling to the appropriate network elements so that the UE is paged in CS.

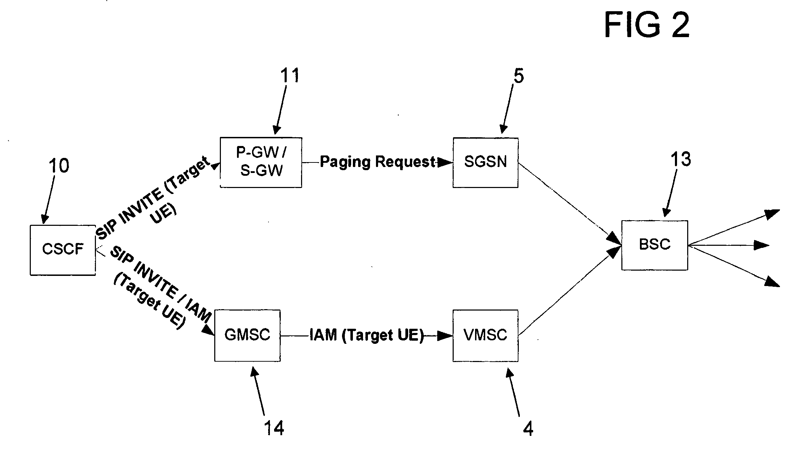

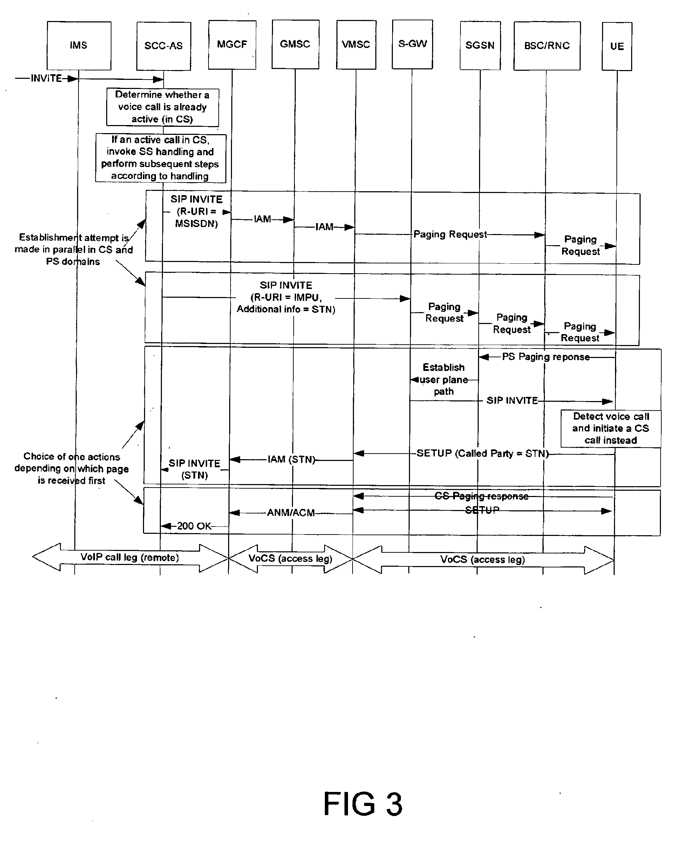

In an alternative arrangement, rather than making a determination in regard to which form to attempt to call UE 1, a parallel paging arrangement can be implemented, in order to page UE 1 in both CS and PS. That is, in the IMS 9, the CSCF 10, rather than just paging in CS, could perform parallel paging in PS and CS by forking the SIP request in the IMS. Parallel paging is illustrated in both Figures 2 and 3.

With reference to Figure 2, a component of the CSCF 10, the Service Consistency & Continuity Application Server (SCC-AS), sends a PS SIP Invite via Gateways 11 (i.e. first to a Packet Gateway (PGW) and then to a Serving Gateway (SGW)). The SGW forwards the PS SIP request to the SGSN 5, which in turn forwards it to an appropriate Base Station Controller (BSC) 13 for paging UE 1 in PS.

The CSCF 10 (or the SCC-AS component within the CSCF) also sends a second SIP invite (e.g. using VoIP) to a Gateway MSC (GMSC) 14 in parallel to the PS SIP Invite. This second SIP invite is sent via a Media Gateway Controller Function (MGCF), which translates the VoIP SIP Invite to into an invitation to establish a CS call, and accordingly sends a CS Initial Address Message (IAM) to the GMSC. The GMSC in turn forwards the IAM to the Visited MSC (VMSC) 4 currently serving the UE 1. The VMSC 4 in turn sends a paging request to the appropriate BSC 13 for CS paging the UE 1.

In a further alternative, if the Gs interface is implemented between the VMSC 4 and SGSN 5, the CS paging request may be sent through the SGSN 5. In this situation, the two parallel paging requests (i.e. CS and PS) will both be sent through the SGSN 5, each being handled independently.

This parallel paging enables the network to establish the call in the CS domain if the CS page arrives first and the UE is in 2G/3G access. This then allows the session setup time to be optimised. However, where UE 1 is camped in a 3G network, this approach does rely on the ability of UE 1 to identify that an incoming SIP INVITE is related to a voice call and that its UE and/or local network preferences require that voice is in the CS domain.

With reference to Figure 3, where the CS page is received first, and UE 1 is located in a CS compatible network, the UE will respond to the VMSC 4 in the usual manner. Similarly the VMSC will respond to the IMS in the usual manner, such as using an ISUP answer message (ANM) or an Address Complete Message (ACM).

Alternatively, where the PS page is received first, if the UE is in a 2G network and therefore not able to implement a voice call using PS, according to a particular embodiment of the invention, the UE is configured to instead initiate a CS call.

There may be some intricate details relating to the mobility management state of the UE in the CS domain that may mean that the CS call attempt is not necessarily possible (e.g. implicit detach at the MSC). If this arises the CS attempt will fail, but the parallel PS IMS attempt will continue without necessarily impacting the original incoming call.

In this parallel paging scenario, upon receiving the PS paging request, UE 1 responds in order to establish the user plane path to the S-GW and accordingly receive the SIP Invite. At this point, upon receiving the SIP invite, UE 1 will be able to determine that the PS request relates to a voice communication, and not a standard PS data communication. Since UE 1 is in a 2G network, and therefore not able to implement PS voice communications, the UE is configured not to respond to the incoming SIP INVITE but to attempt to establish the leg of the call to the IMS anchor point (SCC-AS), using additional binding information, to complete the call establishment via the CS domain. This call establishment will typically comprise an IAM from the VMSC to the MGCF, with the MGCF converting the IAM to a SIP Invite for forwarding to the SCC-AS.

The additional binding information transmitted to the IMS 9, can be used to identify to which specific call instance that the signalling is related, so that the network can bridge the incoming terminating call request from UE 2 with this incoming originating call request from the target UE 1. On reception of the SIP INVITE from UE 1 containing the binding information (typically being the Session Transfer Number (STN) identifying the call request and the called party UE 1), the IMS may then cancel any outstanding requests in the IMS domain towards UE 1.

The IMS may then also include the binding information in the SIP INVITE sent to UE 2. The need for the binding information to be provided by the network during the delivery of the initial SIP INVITE to UE 2 is typically determined by the network, based on knowledge of the location of UE 2 (e.g. roaming or non-roaming) and the presence of multiple active calls. Where the binding information is included in the SIP INVITE, UE 2 will respond to set up the CS call based upon this invite.

If no binding information is received by the UE 2 in the SIP INVITE, it may use a pre-configured PDP context to establish the call in the CS domain. The pre-configured arrangement may use a device management (DM) protocol specified by the Open Mobile Alliance (OMA).

It is to be appreciated that the above example of UE 1 initiating a CS call in view of its location in a 2G network is just one situation where an alternative call type could be initiated. This embodiment of the invention may alternatively be applied by a UE in a 4G RAT network, to initiate a PS call, upon receiving a CS call request.

As noted previously, where UE 1, is in idle mode, and ISR has been implemented, it will not be possible to determine if UE 1 is idle in a 2G, 3G or 4G network. To address this uncertainty, the network can be arranged to decide on a course of action based upon the use of a predefined preference order, consideration of the UE's RAT type (i.e. 2G or 3G) and/or the UE's last known location. The network's decision may also be based upon other factors, including knowledge of whether the UE is roaming e.g. through analysing the Visited Public Land Mobile Network (VPLMN) ID and/or roaming status. Based on these preferences and configuration, the UE would then select one of the two courses of action shown in Figure 3 (and just described).

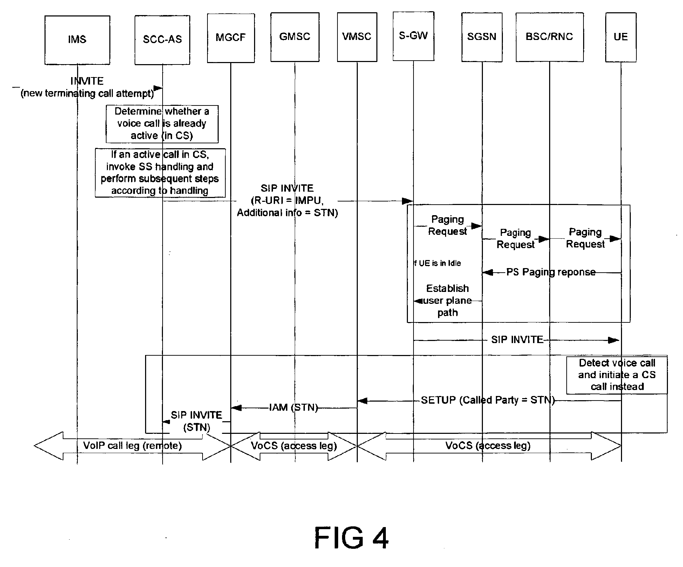

Figure 3 illustrates an embodiment of the invention in conjunction with parallel paging. As parallel paging is not an essential component of the invention embodiment, Figure 4 sets out a simplified alternative embodiment where the IMS delivers the terminating call request in the PS domain only in idle mode (from a voice call perspective). In the Figure 4 example, UE 1 is located in a 2G network and therefore, upon detection that the PS communication establishment request relates to a voice call, causes the network to initiate a CS call towards UE 2, as described above. Again the same detection and conversion mechanism is implemented at UE 1 as described above.

In these embodiments, rather than UE 1 initiating an alternative RAT type call towards UE 2 when an incompatible call request is received, the UE 1 is configured to respond in a terminating manner, for instance to request an alternative service, or even simply to reject the SIP INVITE. In this regard, where an incoming voice call request is a PS request, and the UE identifies that an alternative service needs to used for the call (e.g. due to the UE having an existing CS call in place and/or the UE being located in a 2G RAT) the UE sends a response to terminate the PS call request, e.g. using the 380 (Alternative Service) response code. This then provides knowledge to the IMS network involved that the PS domain is unavailable and/or that the CS domain is currently available. The IMS network may then establish the call using the CS domain in accordance with standard mobile terminating call procedures.

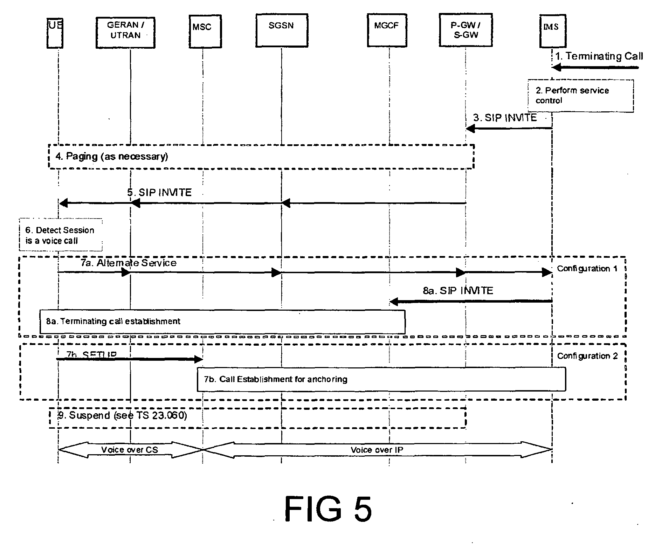

The "terminating manner" embodiments of Figure 3 and 4 may be implemented alongside the "originating manner" response (e.g. to initiate a CS call) as described in relation to Figure 1: Figure 5 illustrates such a combined signalling flow (note that here the UE now appears leftmost in the signal flow and the IMS rightmost).

In Figure 5, upon receiving the PS paging request, UE 1 responds in order to establish the user plane path to the S-GW and accordingly receive the SIP Invite. At this point, upon receiving the SIP Invite, UE 1 will be able to determine that the PS request relates to a voice communication, and not a standard PS data communication. Since UE 1 is in a 2G network (or perhaps in a 3G network, but has a CS call already established), and therefore not able to implement PS voice communications, the UE is configured to indicate that an Alternative Service should be used in an attempt to complete the session.

In this regard, the following call handling steps (numbered with reference to Figure 5) may be performed:
**Step 1:** An incoming PS call for UE 1 is sent through the IMS network.
**Step 2:** Service control is performed on the call.
**Step 3:** If the call is to proceed and the terminating access domain selection selects IMS, the SIP INVITE is forwarded to the UE, via a Packet Gateway (PGW) and a Serving Gateway (SGW)).
   The SIP INVITE may include additional "binding" or "association" information (STN) to aid its association with any potential CS call attempts from the UE (i.e. "binding").
**Step 4:** Paging is triggered if the UE is in Idle state.
   If ISR is active and the UE is camped on E-UTRAN access, the remainder of this procedure is skipped and standard procedures are followed as per TS 23.401 1 (network triggered service request) and 3GPP TS 23.228 (terminating session).
**Step 5**: The SIP INVITE is delivered to the UE. This involves the SGW forwarding the SIP INVITE to the SGSN 5.
**Step 6:** The UE, based on local configuration, performs detection for a voice call associated with the SIP INVITE, identifies the domain in which the call is to be established and determines the mechanism to perform the establishment.
   If the configuration indicates that the voice call can continue in the IMS domain or the session is not a voice call, the session establishment continues as per 3GPP TS 23.228 in the IMS domain and the remainder of this procedure is skipped.
   NOTE:Local configuration can be performed via OMA DM (device management) or pre-configuration of the UE. Different policies may apply based on knowledge of roaming status and RAT type.
**Step 7a:** If the configuration requires that the call shall be treated in a terminating manner, the UE responds by indicating that an Alternate Service is to be used for completing this session. This implements the scheme set out in Figures 3 and 4.
**Step 8a:** On receiving the Alternate Service indication, the IMS domain shall reattempt the terminating call establishment in the CS domain, towards the UE 1 via the MGCF.
**Step 7b:** If however the configuration requires that the call shall be treated in an originating manner, the UE 1 establishes a CS call using locally configured or any received binding/association information, such as the STN. CS call establishment is completed towards IMS, as defined in 3GPP TS 23.237, taking into account the binding/association information provided by the UE.
**Step 9:** If the UE is in GERAN access without DTM (i.e. Dual Transfer Mode of PS and CS), the UE suspends the PS bearers. This may occur in parallel to or immediately after step 8a. This procedure is as specified in 3GPP TS 23.060.

The call handling detailed in the embodiments of the invention may also be needed when an SRVCC (Single Radio Voice Call Continuity) UE is involved, particularly where the UE enters a CS Fallback only network. The additional call handling functionality by UE 1 described in the embodiments of the invention enable a SRVCC UE to maintain the continuity between IMS(CS)/IMS(PS) transfers.

If the UE supports 3GPP2 1xCS access, the 1xCS SRVCC UE is a UE that is capable of performing SRVCC to the 3GPP2 1xCS system, thereby facilitating inter-working with 3GPP2 1xCS. The interaction between such a UE and E-UTRAN is described in 3GPP TR 36.938. The interaction with the 3GPP2 1xCS system is equivalent to that described in Figure 5.

In order for the UE to facilitate inter-working with 3GPP UTRAN/GERAN, a 3GPP SRVCC UE is needed to perform SRVCC. A 3GPP SRVCC UE is one which is configured to perform detection of incoming IMS sessions for voice calls and to establish voice calls in the CS domain when camped on UTRAN or GERAN, based on a predefined detection policy. The interaction between such a UE and E-UTRAN is described in 3GPP TS 36.300 and the interaction between such a UE and UTRAN (HSPA) is described in 3GPP TS 25.331.

As will be appreciated by the reader certain network nodes and signalling steps have been omitted from Figures 3 to 5 for brevity. These steps are however extraneous to the understanding of the invention. Furthermore, the flows of Figures 3 to 5 assume the UE is in idle state.

While the techniques above are particularly discussed in terms of GERAN/UTRAN and E-UTRAN, the invention may be applied equally to other digital cellular RATs, as the skilled person will readily appreciate. For instance, other possible cellular network RATs (3GPP and non-3GPP) to which the present invention may apply include: WiFi; GSM; 3G/UMTS; CDMA2000; LTE; WiMAX and other "fourth generation" cellular technologies; TETRA and/or other dedicated cellular networks.

## Claims

1. A method of establishing a communication with a mobile terminal configured for use in a mobile telecommunications network, the network including at least two different subsystems, the method including:
receiving a voice communication request in accordance with a first subsystem, at the mobile terminal;
determining if conditions associated with the mobile terminal are compatible for implementing a voice call in accordance with the first subsystem;,
sending a relevant response where the conditions associated with the mobile terminal are determined to be incompatible for implementing a voice call in accordance with the first subsystem, **characterised in that** the incompatible conditions include:
(i) where the first subsystem is a packet switched subsystem, the mobile terminal is idle and registered with a network element which only supports voice communications in a circuit switched subsystem; or
(ii) where the first subsystem is a packet switched subsystem, the mobile terminal is configured to only support voice communications in a circuit switched subsystem; or
(iii) where the first subsystem is a circuit switched subsystem, the mobile terminal is idle and registered with a network element which only supports voice communications in a packet switched subsystem; or
(iv) where the first subsystem is a circuit switched subsystem, the mobile terminal being configured to only support voice communications in a packet switched subsystem.

2. The method of claim 1 wherein the voice communication request is a SIP INVITE request and the relevant response is a rejection of the SIP INVITE request in accordance with the first subsystem.

3. The method of claim 1 where the first subsystem is a packet switched subsystem, the relevant response is a request to reattempt the voice communication in accordance with the circuit switched subsystem.

4. The method of claim 1 where the first subsystem is a packet switched subsystem, the relevant response is a request to establish a new communication in accordance with the circuit switched subsystem.

5. The method of claim 1 where the first subsystem is a circuit switched subsystem, the relevant response is a request to reattempt the voice communication in accordance with the packet switched subsystem.

6. The method of claim 1 where the first subsystem is a circuit switched subsystem the relevant response is a request to establish a new communication in accordance with the packet switched subsystem.

7. In a mobile telecommunications network including at least two different subsystems and a mobile terminal configured for use in the network, an arrangement for use in association with the mobile terminal for establishing a voice communication with the mobile terminal, the arrangement including:
receiver configured to receive a voice communication request forwarded to the mobile terminal, the voice communication request in accordance with a first subsystem;
determination means configured to determine if conditions associated with the mobile terminal are not compatible for implementing a voice call in accordance with the first subsystem, **characterised in that** the conditions including:
i) where the first subsystem is a packet switched subsystem, the mobile terminal is idle and registered with a network element which only supports voice communications in a circuit switched subsystem; or
ii) where the first subsystem is a packet switched subsystem, the mobile terminal is configured to only support voice communications in a circuit switched subsystem; or
iii) where the first subsystem is a circuit switched subsystem, the mobile terminal is idle and registered with a network element which only supports voice communications in a packet switched subsystem; or
iv) where the first subsystem is a circuit switched subsystem, the mobile terminal being configured to only support voice communications in a packet switched subsystem; and
transmitter configured to transmit a relevant response where conditions are determined not to be compatible.

8. The arrangement of claim 7 wherein the voice communication request is a SIP INVITE and the relevant response is a rejection of the SIP INVITE request in accordance with the first subsystem.

9. The arrangement of claim 7 where the first subsystem is a packet switched subsystem and the transmitter is configured to transmit the relevant response as a request to reattempt the voice communication in accordance with the circuit switched subsystem.

10. The arrangement of claim 7 where the first subsystem is a packet switched subsystem and the transmitter is configured to transmit the relevant response as a request to establish a new communication in accordance with the circuit switched subsystem.

11. The arrangement of claim 7 where the first subsystem is a circuit switched subsystem and the transmitter is configured to transmit the relevant response as a request to reattempt the voice communication in accordance with the packet switched subsystem.

12. The arrangement of claim 7 where the first subsystem is a circuit switched subsystem and the transmitter is configured to transmit the relevant response as a request to establish a new communication in accordance with the packet switched subsystem.

## Patentansprüche

1. Verfahren zum Aufbau einer Kommunikationsverbindung mit einem Mobilendgerät, das für die Verwendung in einem mobilen Telekommunikationsnetzwerk konfiguriert ist, wobei das Netzwerk mindestens zwei verschiedene Untersysteme umfasst, wobei das Verfahren Folgendes umfasst:
Empfangen einer Sprachkommunikationsanfrage gemäß einem ersten Untersystem, bei dem Mobilendgerät;
Ermitteln, ob Bedingungen, die mit dem mobilen Endgerät verbunden sind, für die Tätigung eines Anrufs gemäß dem ersten Untersystem kompatibel sind,
Senden einer relevanten Antwort, wobei ermittelt wird, dass die Bedingungen, die mit dem mobilen Endgerät verbunden sind, für die Tätigung eines Sprachanrufs gemäß dem ersten Untersystem inkompatibel sind, **dadurch gekennzeichnet, dass** die inkompatiblen Bedingungen Folgendes umfassen:
(i) wenn das erste Untersystem ein paketvermitteltes Untersystem ist, ist das Mobilendgerät im Leerlauf und bei einem Netzwerkelement registriert, das nur die Sprachkommunikation in einem leitungsvermittelten Untersystem unterstützt; oder
(ii) wenn das erste Untersystem ein paketvermitteltes Untersystem ist, ist das Mobilendgerät so konfiguriert, dass es nur Sprachkommunikation in einem leitungsvermittelten Untersystem unterstützt; oder
(iii) wenn das erste Untersystem ein leitungsvermitteltes Untersystem ist, ist das Mobilendgerät im Leerlauf und bei einem Netzwerkelement registriert, das nur die Sprachkommunikation in einem paketvermittelten Untersystem unterstützt; oder
(iv) wenn das erste Untersystem ein leitungsvermitteltes Untersystem ist, ist das Mobilendgerät so konfiguriert, dass es nur die Sprachkommunikation in einem paketvermittelten Untersystem unterstützt.

2. Verfahren nach Anspruch 1, wobei die relevante Antwort eine Ablehnung der SIP INVITE-Anfrage gemäß dem ersten Untersystem ist.

3. Verfahren nach Anspruch 1, wobei, wenn das erste Untersystem ein paketvermitteltes Untersystem ist, die relevante Antwort eine Anfrage ist, die Sprachkommunikation gemäß dem leitungsvermittelten Untersystem erneut zu versuchen.

4. Verfahren nach Anspruch 1, wobei, wenn das erste Untersystem ein paketvermitteltes Untersystem ist, die relevante Antwort eine Anfrage ist, eine neue Sprachkommunikation gemäß dem leitungsvermittelten Untersystem einzurichten.

5. Verfahren nach Anspruch 1, wobei, wenn das erste Untersystem ein leitungsvermitteltes Untersystem ist, die relevante Antwort eine Anfrage ist, die Sprachkommunikation gemäß dem paketvermittelten Untersystem erneut zu versuchen.

6. Verfahren nach Anspruch 1, wobei, wenn das erste Untersystem ein leitungsvermitteltes Untersystem ist, die relevante Antwort eine Anfrage ist, eine neue Sprachkommunikation gemäß dem paketvermittelten Untersystem einzurichten.

7. In einem Mobiltelekommunikationsnetzwerk, das mindestens zwei verschiedene Untersysteme und ein Mobilendgerät umfasst, das für die Verwendung in dem Netzwerk konfiguriert ist, eine Anordnung zur Verwendung in Verbindung mit dem Mobilendgerät zur Einrichtung einer Sprachkommunikation mit dem Mobilendgerät, wobei die Anordnung Folgendes umfasst:
einen Empfänger."der für den Empfang einer Sprachkommunikationsanfrage konfiguriert ist, die zu dem Mobilendgerät weitergeleitet wird, wobei die Sprachkommunikationsanfrage gemäß einem ersten Untersystem ausgeführt wird;
eine Ermittlungsvorrichtung, die dafür konfiguriert ist, zu ermitteln, ob Bedingungen, die mit dem Mobilendgerät verbunden sind, für die Durchführung eines Anrufs gemäß dem ersten nicht kompatibel sind, **dadurch gekennzeichnet, dass** die Bedingungen Folgendes umfassen:
i) wenn das erste Untersystem ein paketvermitteltes Untersystem ist, ist das Mobilendgerät im Leerlauf und bei einem Netzwerkelement registriert, das nur die Sprachkommunikation in einem leitungsvermittelten Untersystem unterstützt; oder
ii) wenn das erste Untersystem ein paketvermitteltes Untersystem ist, ist das Mobilendgerät so konfiguriert, dass es nur die Sprachkommunikation in einem leitungsvermittelten Untersystem unterstützt, oder
iii) wenn das erste Untersystem ein leitungsvermitteltes Untersystem ist, ist das Mobilendgerät im Leerlauf und bei einem Netzwerkelement registriert, das nur die Sprachkommunikation in einem paketvermittelten Untersystem unterstützt; oder
iv) wenn das erste Untersystem ein leitungsvermitteltes Untersystem ist, ist das Mobilendgerät so konfiguriert, dass es nur die Sprachkommunikation in einem paketvermittelten Untersystem unterstützt, und
einen Sender, der zum Senden einer relevanten Antwort konfiguriert ist, wenn ermittelt wird, dass die Bedingungen nicht kompatibel sind.

8. Anordnung nach Anspruch 7, wobei die relevante Antwort eine Ablehnung der SIP INVITE-Anfrage gemäß dem ersten Untersystem ist.

9. Anordnung nach Anspruch 7, wobei, wenn das erste Untersystem ein paketvermitteltes Untersystem ist und der Sender so konfiguriert ist, dass er die relevante Antwort als Anfrage sendet, um die Sprachkommunikation gemäß dem leitungsvermittelten Untersystem erneut zu versuchen.

10. Anordnung nach Anspruch 7, wobei, wenn das erste Untersystem ein paketvermitteltes Untersystem ist, und der Sender so konfiguriert ist, dass er die relevante Antwort als Anfrage sendet, um eine neue Kommunikation gemäß dem leitungsvermittelten Untersystem einzurichten.

11. Anordnung nach Anspruch 7, wobei, wenn das erste Untersystem ein leitungsvermitteltes Untersystem ist und der Sender so konfiguriert ist, dass er die relevante Antwort als Anfrage sendet, um die Sprachkommunikation gemäß dem paketvermittelten Untersystem erneut zu versuchen.

12. Anordnung nach Anspruch 7, wobei, wenn das erste Untersystem ein leitungsvermitteltes Untersystem ist und der Sender so konfiguriert ist, dass er die relevante Antwort als Anfrage sendet, um eine neue Kommunikation gemäß dem paketvermittelten Untersystem einzurichten.

## Revendications

1. Procédé destiné à établir une communication avec un terminal mobile configuré pour une utilisation dans un réseau de télécommunications mobiles, le réseau incluant au moins deux différents sous-systèmes, le procédé incluant les opérations consistant à :
recevoir, au niveau du terminal mobile, une demande de communication vocale en conformité avec un premier sous-système ;
déterminer si des conditions, associées au terminal mobile, sont compatibles pour la mise en oeuvre d'un appel vocal en conformité avec le premier sous-système ;
envoyer une réponse pertinente dans le cas où il a été déterminé que les conditions associées au terminal mobile sont incompatibles pour la mise en oeuvre d'un appel vocal en conformité avec le premier sous-système, **caractérisé en ce que** les conditions incompatibles englobent :
(i) dans le cas où le premier sous-système est un sous-système à commutation par paquets, le terminal mobile est en veille et est enregistré auprès d'un élément de réseau qui prend uniquement en charge des communications vocales dans un sous-système à commutation de circuits ; ou
(ii) dans le cas où le premier sous-système est un sous-système à commutation par paquets, le terminal mobile est configuré de façon à prendre uniquement en charge des communications vocales dans un sous-système à commutation de circuits ; ou
(iii) dans le cas où le premier sous-système est un sous-système à commutation de circuits, le terminal mobile est en veille et est enregistré auprès d'un élément de réseau qui prend uniquement en charge des communications vocales dans un sous-système à commutation par paquets ; ou
(iv) dans le cas où le premier sous-système est un sous-système à commutation de circuits, le terminal mobile étant configuré de façon à prendre uniquement en charge des communications vocales dans un sous-système à commutation par paquets.

2. Procédé selon la revendication 1, la réponse pertinente étant une réjection de la demande SIP INVITE, en conformité avec le premier sous-système.

3. Procédé selon la revendication 1, dans le cas où le premier sous-système est un sous-système à commutation par paquets, la réponse pertinente étant une demande visant à faire une autre tentative de communication vocale en conformité avec le sous-système à commutation de circuits.

4. Procédé selon la revendication 1, dans le cas où le premier sous-système est un sous-système à commutation par paquets, la réponse pertinente étant une demande visant à établir une nouvelle communication en conformité avec le sous-système à commutation de circuits.

5. Procédé selon la revendication 1, dans le cas où le premier sous-système est un sous-système à commutation de circuits, la réponse pertinente étant une demande visant à faire une autre tentative de communication vocale en conformité avec le sous-système à commutation par paquets.

6. Procédé selon la revendication 1, dans le cas où le premier sous-système est un sous-système à commutation de circuits, la réponse pertinente étant une demande visant à établir une nouvelle communication en conformité avec le sous-système à commutation par paquets.

7. Dans un réseau de télécommunications mobiles, incluant au moins deux différents sous-systèmes et un terminal mobile configuré pour une utilisation dans le réseau, un agencement destiné à être utilisé en association avec le terminal mobile afin d'établir une communication vocale avec le terminal mobile, l'agencement comportant :
un récepteur configuré de façon à recevoir une demande de communication vocale réacheminée au terminal mobile, la demande de communication vocale étant en conformité avec un premier sous-système ;
des moyens de détermination configurés de façon à déterminer si des conditions, associées au terminal mobile, ne sont pas compatibles pour la mise en oeuvre d'un appel vocal en conformité avec le premier sous-système, **caractérisé en ce que** les conditions englobent :
i) dans le cas où le premier sous-système est un sous-système à commutation par paquets, le terminal mobile est en veille et est enregistré auprès d'un élément de réseau qui prend uniquement en charge des communications vocales dans un sous-système à commutation de circuits ; ou
ii) dans le cas où le premier sous-système est un sous-système à commutation par paquets, le terminal mobile est configuré de façon à prendre uniquement en charge des communications vocales dans un sous-système à commutation de circuits ; ou
iii) dans le cas où le premier sous-système est un sous-système à commutation de circuits, le terminal mobile est en veille et est enregistré auprès d'un élément de réseau qui prend uniquement en charge des communications vocales dans un sous-système à commutation par paquets ; ou
iv) dans le cas où le premier sous-système est un sous-système à commutation de circuits, le terminal mobile étant configuré de façon à prendre uniquement en charge des communications vocales dans un sous-système à commutation par paquets ; et
un émetteur configuré de façon à émettre une réponse pertinente dans le cas où il a été déterminé que des conditions ne sont pas compatibles.

8. Agencement selon la revendication 7, la réponse pertinente étant une réjection de la demande SIP INVITE, en conformité avec le premier sous-système.

9. Agencement selon la revendication 7, dans le cas où le premier sous-système est un sous-système à commutation par paquets et l'émetteur est configuré de façon à émettre la réponse pertinente en tant que demande visant à faire une autre tentative de communication vocale en conformité avec le sous-système à commutation de circuits.

10. Agencement selon la revendication 7, dans le cas où le premier sous-système est un sous-système à commutation par paquets et l'émetteur est configuré de façon à émettre la réponse pertinente en tant que demande visant à établir une nouvelle communication en conformité avec le sous-système à commutation de circuits.

11. Agencement selon la revendication 7, dans le cas où le premier sous-système est un sous-système à commutation de circuits et l'émetteur est configuré de façon à émettre la réponse pertinente en tant que demande visant à faire une autre tentative de communication vocale en conformité avec le sous-système à commutation par paquets.

12. Agencement selon la revendication 7, dans le cas où le premier sous-système est un sous-système à commutation de circuits et l'émetteur est configuré de façon à émettre la réponse pertinente en tant que demande visant à établir une nouvelle communication en conformité avec le sous-système à commutation par paquets.
